# EUROPEAN PATENT APPLICATION

(11) **EP 3 627 348 A1**
(43) Date of publication of application: **25.03.2020**
(21) Application number: 18196381.0
(22) Date of filing: 24.09.2018
(51) Int. Cl.: G06F 16/2453

(54) **APPARATUS AND METHOD FOR DECENTRALISED PERSONALISED SEARCH**

(71) Applicant: Nokia Technologies Oy, 02610 Espoo (FI)
(72) Inventor: PALYUTINA, Karina, Cambridge, CB30 (GB); MARTIN-LOPEZ, Enrique, Cambridge, CB30 (GB); FitzGerald, Edward, Cambridge, CB30 (GB)
(74) Representative: Nokia EPO representatives

(57) **Abstract**

An apparatus, method and computer program is described comprising: receiving a search query; generating a transformed query based at least partially on the received search query, user data and one or more parameters relating to a search provider or search algorithm; sending the transformed query to the search provider; receiving first search results from the search provider in response to the transformed query; generating second search results; and providing second search results in response to said search query.

## Description

### Field

This specification relates to searching, such as Internet searching.

### Background

A search, such as an Internet search, may involve a user requesting information from a search service provider. The user may have information (such as search history) that may improve the search results, but that the user may not wish to share with the search service provider. There remains scope for further developments in this area.

### Summary

In a first aspect, this specification describes an apparatus comprising: means for receiving a search query; means for generating a transformed query based at least partially on the received search query, user data and one or more parameters relating to a search provider or search algorithm; means for sending the transformed query to the search provider; means for receiving first search results from the search provider in response to the transformed query; means for generating second search results; and means for providing second search results in response to said search query. The apparatus may be an intermediary device that, in use, is provided between a provider of the search query (e.g. a user device) and the search provider.

The search query may be received from a user. The second search results may be sent to said user. In some embodiments, the user from which the search query is received and the user to which the second search results are sent is the same user, however this is not essential to all embodiments. Thus, the search query may be received from a first user and the second search results sent to a second user. In the event that a payment is being made for this search, the payment may be paid as part of the search query or in some other way by the party requesting the search.

The second search results may be ordered search results, wherein said search results are ordered based at least partially on the user data.

The means for generating the transformed query may comprise one or more multi party computation modules. Alternatively, or in addition, the means for generating the second search results may comprise one or more multi party computation modules. Some or all of the user data may be obtained from a database (such as a user-controlled database).

The one or more parameters relating to the search provider or search algorithm may be received from the search provider. Said one or more parameters may be provided to a multi-party computation module.

Some embodiments may comprise means for determining a user history vector based on an aggregation or combination of user information and user search history (e.g. a full search history) wherein said user data is based, at least in part, on said user history vector. The user history vector may be further based on aggregated user data of a plurality of users.

Some embodiments may comprise means for receiving a user input, wherein the user input comprises one or more user preferences for storing, disclosing, deleting and/or not disclosing one or more parts of the user data. The user input may be provided using an Internet browser (e.g. as part of privacy controls incorporated into such a browser). The means for generating the transformed query may act in accordance with the user preferences in the event that a payment is made. Thus, the user may be provided with the second search results in the event that either a payment is made or the user data shared with the search provider.

Some embodiments may further comprise means for enabling the user to provide a/the payment. The payment may be made using a signed cryptocurrency transaction from the user.

Some embodiments may comprise means updating and storing aggregated variables.

The said means may comprise: at least one processor; and at least one memory including computer program code, the at least one memory and the computer program code configured, with the at least one processor, to cause the performance of the apparatus.

In a second aspect, this specification describes a method comprising: receiving a search query; generating a transformed query based at least partially on the received search query, user data and one or more parameters relating to a search provider or search algorithm; sending the transformed query to the search provider; receiving first search results from the search provider in response to the transformed query; generating second search results; and providing second search results in response to said search query.

The search query may be received from a user. The second search results may be sent to said user. In some embodiments, the user from which the search query is received and the user to which the second search results are sent is the same user, however this is not essential to all embodiments.

The second search results may be ordered search results, wherein said search results are ordered based at least partially on the user data.

Some or all of the user data may be obtained from a database (such as a user-controlled database).

The one or more parameters relating to the search provider or search algorithm may be received from the search provider.

A user history vector may be determined based on an aggregation or combination of user information and user search history (e.g. a full search history) wherein said user data is based, at least in part, on said user history vector. The user history vector may be further based on aggregated user data of a plurality of users.

A user input may be provided, wherein the user input comprises one or more user preferences for storing, disclosing, deleting and/or not disclosing one or more parts of the user data. The user input may be provided using a browser, such as an Internet browser.

An arrangement for enabling the user to provide a/the payment may be provided. The payment may be made using a signed cryptocurrency transaction from the user.

Some embodiments may comprise means updating and storing aggregated variables.

In a third aspect, this specification describes any apparatus configured to perform any method as described with reference to the second aspect.

In a fourth aspect, this specification describes computer-readable instructions which, when executed by computing apparatus, cause the computing apparatus to perform any method as described with reference to the second aspect.

In a fifth aspect, this specification describes a computer program comprising instructions for causing an apparatus to perform at least the following: receive a search query; generate a transformed query based at least partially on the received search query, user data and one or more parameters relating to a search provider or search algorithm; send the transformed query to the search provider; receive first search results from the search provider in response to the transformed query; generate second search results; and provide second search results in response to said search query.

In a sixth aspect, this specification describes a computer-readable medium (such as a non-transitory computer readable medium) comprising program instructions stored thereon for performing at least the following: receiving a search query; generating a transformed query based at least partially on the received search query, user data and one or more parameters relating to a search provider or search algorithm; sending the transformed query to the search provider; receiving first search results from the search provider in response to the transformed query; generating second search results; and providing second search results in response to said search query.

In a seventh aspect, this specification describes an apparatus comprising: at least one processor; and at least one memory including computer program code which, when executed by the at least one processor, causes the apparatus to: receive a search query; generate a transformed query based at least partially on the received search query, user data and one or more parameters relating to a search provider or search algorithm; send the transformed query to the search provider; receive first search results from the search provider in response to the transformed query; generate second search results; and provide second search results in response to said search query.

In an eighth aspect, this specification describes an apparatus comprising: a first input for receiving a search query; a query transform module for generating a transformed query based at least partially on the received search query, user data and one or more parameters relating to a search provider or search algorithm; a first output for sending the transformed query to the search provider; a second input for receiving first search results from the search provider in response to the transformed query; an ordering transform module for generating second search results; and a second output for providing second search results in response to said search query. The apparatus may be an intermediary device that, in use, is provided between a provider of the search query (e.g. a user device) and the search provider.

### Brief description of the drawings

Example embodiments will now be described, by way of non-limiting examples, with reference to the following schematic drawings:
FIG. 1 is a block diagram of a system in accordance with an example embodiment;
FIG. 2 is a flow chart showing an algorithm in accordance with example embodiments;
FIG. 3 is a block diagram of a system in accordance with an example embodiment;
FIG. 4 is a flow chart showing an algorithm in accordance with example embodiments;
FIG. 5 is a block diagram of a system in accordance with an example embodiment;
FIG. 6 is a flow chart showing an algorithm in accordance with example embodiments;
FIG. 7 is a flow chart showing an algorithm in accordance with example embodiments;
FIG. 8 is a flow chart showing an algorithm in accordance with example embodiments;
FIG. 9 is a block diagram of components of a system in accordance with an exemplary embodiment; and
FIGS. 10A and 10B show tangible media, respectively a removable non-volatile memory unit and a compact disc (CD) storing computer-readable code which when run by a computer perform operations according to embodiments.

### Detailed description

In the description, like reference numerals relate to like elements throughout.

A search, such as an Internet search, may involve a user requesting information from a search service provider. The user may have information (such as search history or user location information) that may improve the search results, but that the user may not wish to share with the search service provider.

Consider the following example. A user enters the search query "Python" into an Internet search engine, without revealing any personal details about the user. The search query is matched by the search service provider against an index of websites according to a matching function and an ordering is produced such that the most likely relevant results are the top-returned sites. The indexing and the ordering algorithm are likely to be valuable secrets of the search service provider.

In practice, searches, such as Internet searches, are rarely entirely anonymous. For example, the search for "Python" above may include metadata that provides some context for the search. For example, the location of the user may be included. Thus, for example, if the search for "Python" were requested from Cambridge, United Kingdom (where a lot of computer programmers dwell), the search results may be prioritised to return results related to the Python programming language. Alternatively, if the search for "Python" were requested from Eastern Africa, where Pythonidae abound, the search results may be prioritised to return results relating to snakes.

It is clear from the example above that search service providers have a need to store personal data for users, as well as aggregate data, in order to disambiguate and contextualise search queries. As a result, user's demographic, location data, shopping habits and political preferences may be learnt over time. Whilst this may provide an improved search experience, at least some users would prefer to have control over how such aggregated personal data is collected and used.

Because the search space is vast, indexing by search service providers is required in order to provide fast and efficient searching algorithms. Such indexing is therefore valuable to search service providers (and, indeed, may be the most valuable asset of a search provider). Thus, search providers will not generally provide users with access to such indexing and algorithm information.

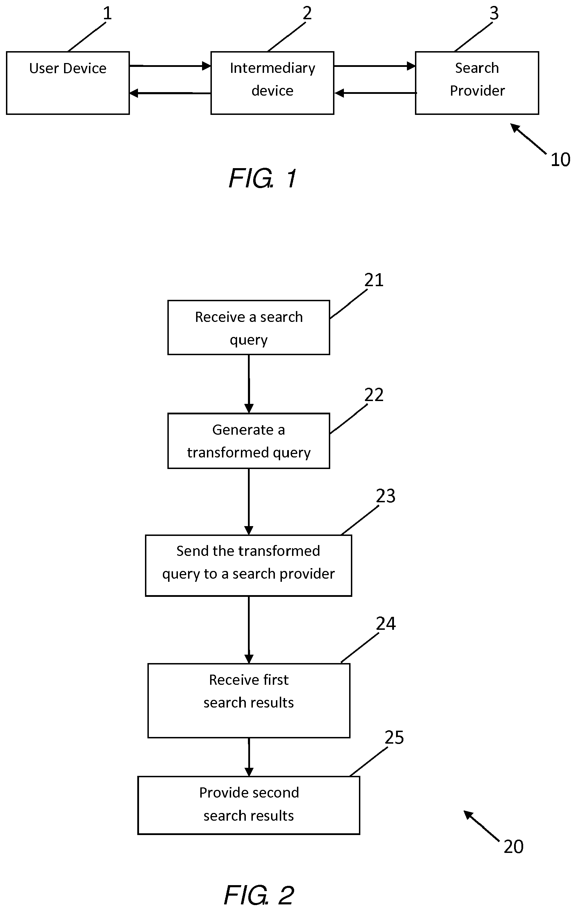

FIG. 1 is a block diagram of a system, indicated generally by the reference numeral 10, in accordance with an example embodiment. System 10 comprises a user device 1, an intermediary device 2, and a search provider 3. A user may use the user device 1 for sending a search query. The search provider 3 may be a search engine that may be used for any search queries. The intermediary device 2 is an intermediary device between the user 1 and the search provider 3, such that the intermediary device 2 may receive search queries from the user device 1, and send relevant search results to the user device 1 based on inputs from the search provider 3 and the user.

When the intermediary device 2 receives the search query and the user data, the search query and the user data is not accessible by the search provider 3. The search provider 3 may make use of user data or details of search queries of a user in a variety of ways, for example in order to determine relevant advertisements to be provided to users. Users may not be aware or may not approve that their data or browsing history are being stored and used. However, search results provided to a user may not be relevant or useful to the user if the user data is not used in determining the search results. As described further below, the intermediary device 2 can be used to provide an efficient search experience to the user, while protecting the user data.

FIG. 2 is a flowchart showing an algorithm, indicated generally by the reference numeral 20, in accordance with an example embodiment. The process of algorithm 20 may be carried out at the intermediary device 2. At operation 21, the intermediary device 2 receives a search query from the user or user device 1. At operation 22, the intermediary device 2 generates a transformed query. As described further below, the transformed query may be based at least partially on one or more of the received search query, user data, and one or more parameters relating to the search provider 3. At operation 23, the intermediary device 2 sends the transformed query to the search provider 3. At operation 24, the intermediary device 2 receives first search results from the search provider 3 in response to the transformed query. At operation 25, the intermediary device 2 provides second search results in response to the search query.

In an example embodiment, the second search results may be sent to the user device 1 at operation 25. Alternatively, or in addition, the second search results may be stored at a database accessible by the user. Other options, such as sending the search results to a different user, are also possible.

In an example embodiment, the second search results are ordered search results. After receiving the first search results from the search provider at operation 24, the intermediary device 2 may order the first search results based on the user data and generate ordered search results. The ordered search results may be generated using information of a second ordering algorithm included in the one or more parameters relating to the search provider 3.

In an example embodiment, user data may include a user's personal data (such as name, location, date of birth, or the like) and/or a user's past browsing history. The user data may allow the search results (or the ordering of the search results) to be more relevant to the user. The user data may be stored in a database. The database may be locally or remotely controlled by the user, such that the search provider 3 and/or the intermediary device 1 may not have unauthorized access to the user data.

In an example embodiment, the one or more parameters relating to the search provider 3 are received from the search provider 3. The one or more parameters may include information of a first search algorithm that is used by the search provider 3.

In an example embodiment, at least some of the information provided to the intermediary device 2 by one party is not disclosed to another party. For example, the search query and user data received by intermediary device 2 may not be disclosed to the search provider 3, and/or the one or more parameters relating to the search provider 3 may not be disclosed to the user.

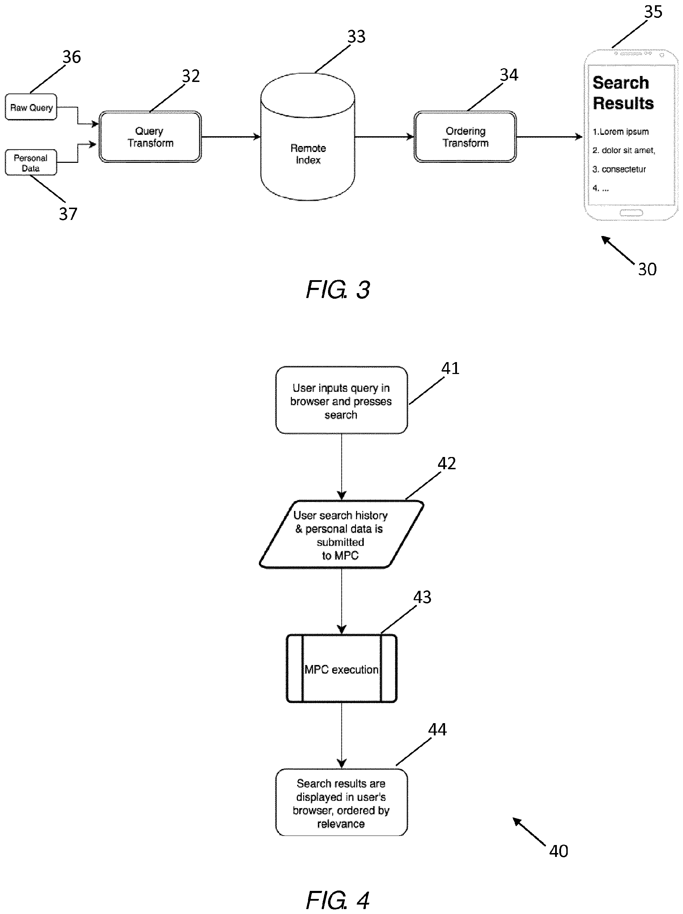

FIG. 3 is a block diagram of a system, indicated generally by the reference numeral 30, in accordance with an example embodiment. The system 30 comprises a query transform module 32, a remote index 33, an ordering transform module 34 and a user device 35. The query transform module 32 and the ordering transform module 34 may form part of an intermediary device (such as the device 2 described above). The remote index 33 may be hosted by a search provider (such as the search provider 3 described above). The user device 35 is an example of the user device 1 described above. As shown in FIG. 3, a raw query 36 (e.g. search query) and personal data 37 (e.g. user data of the user data) are received as inputs to the query transform module 32.

A search query (in the form of the raw query 36 and personal data 37, for example provided by the user device 1) is received at the query transform module 32 (operation 21 of the algorithm 20). The query transform module 32 generates the transformed query (operation 22 of the algorithm 20) and sends the transformed query to a remote index 33 (operation 23 of the algorithm 20). The details of the query transform may be provided by the search provider (such as the search provider 3) and may be secret to the search provider (such that those details should not be shared with the user). The transformed query may contain little or no user data, such that the user data remains protected and undisclosed to the search provider 3. The transformed query is then matched using the remote index 33, and the first search results are generated at the search provider and provided to the intermediary device 2.

Thus, the first search results are received at the ordering transform module 34 (operation 24 of the algorithm 20). The ordering transform module 34 orders the first search results based on the user data. The ordered search results are then provided to a user device 35 (operation 25 of the algorithm 20), and displayed to the user. The details of the ordering transform module may be provided by the search provider (such as the search provider 3) and may be secret to the search provider (such that those details should not be shared with the user).

In an example embodiment, the intermediary device 2 comprises one or more multi-party computation (MPC) modules performing tasks such as secure multi-party computation, homomorphic encryption, or the like. Thus, for example, the query transform 32 and the ordering transform 34 may be implemented using separate MPC protocols. In each case, the user and the search service provider can input secret information to the relevant MPC, and the MPC can be used to provide suitable search results to the user whilst maintaining the secrets. Example embodiments including MPC modules are described further below.

FIG. 4 is a flowchart showing an algorithm, indicated generally by the reference numeral 40, in accordance with an example embodiment. At operation 41, the user inputs a search query, for example in an Internet browser. At operation 42, user data (including, for example, personal data and browsing history) is submitted to an MPC module.

At operation 43, the MPC module receives the search query and the user data (similar to the receive operation 21 of the algorithm 20) and executes the search query in order to generate search results. More specifically, the operation 43 involves (under the control of the MPC): generating a transformed query based on one or more of the search query, user data, and one or more parameters relating to the search provider or search algorithm; obtaining search results from the search provider (based on the transformed query); and ordering the search results based on user data and one or more parameters. Thus, the operation 43 is similar to the operations 23 to 25 of the algorithm 20.

At operation 44, the search results are displayed to the user (e.g. in the user's browser). The search results are ordered by relevance.

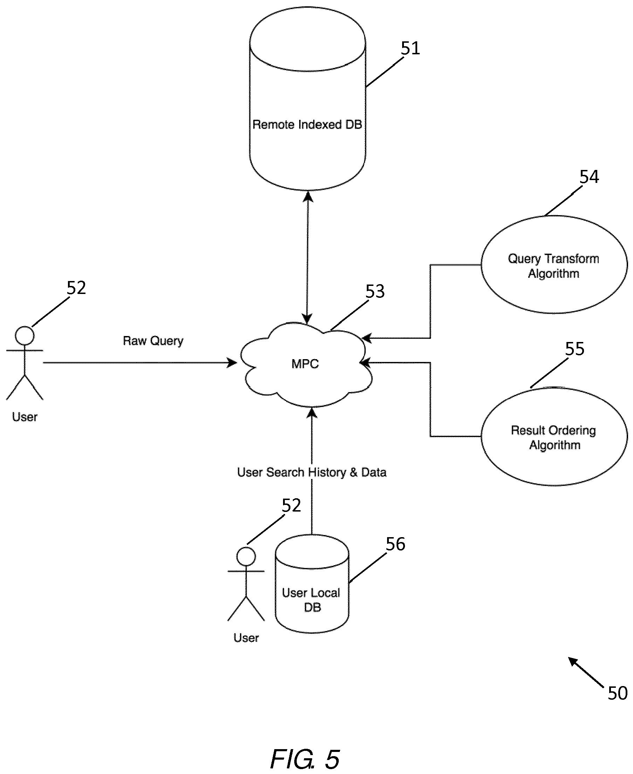

FIG. 5 is a block diagram of a system, indicated generally by the reference numeral 50, in accordance with an example embodiment. The system 50 comprises a remote indexed database 51 (similar to the remote index module 33 described above), an MPC module 53, a query transform algorithm 54 (having similar functionality to the query transform module 32), a result ordering algorithm 55 (having similar functionality to the ordering transform module 34) and a user-controlled local database 56.

The query transform algorithm 54, shown schematically in FIG. 5, represents a first MPC protocol in which the user secretly inputs a raw search query and personal data and the search service provider secretly inputs proprietary parameters relating to the "query transform" functionality. The query transform algorithm 54 can then output a transformed query (for use by the search service provider) without providing either the raw search query or the personal data to the search service provider and without providing the proprietary parameters relating to the query transform functionality to the user.

In a similar way, the result ordering algorithm 55, shown schematically in FIG. 5, represents a second MPC protocol in which the user secretly inputs personal data and the search service provider secretly inputs proprietary parameters relating to the "ordering transform" functionality. The result ordering transform algorithm 55 can then output a ordered results (for provision to the user) without providing the personal data to the search service provider and without providing the proprietary parameters relating to the ordering transform functionality to the user.

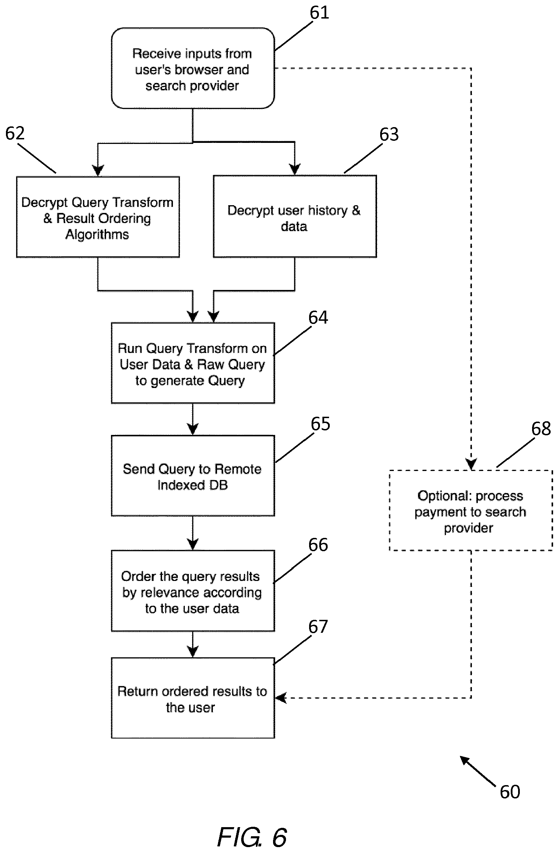

FIG. 6 is a flowchart showing an algorithm, indicated generally by the reference numeral 60, in accordance with an example embodiment. The algorithm 60 may be implemented using the system 50 described above.

At operation 61, the MPC module 53 receives inputs from the user browser and the search provider. For example, the MPC module may receive data from the user 52 and from the relevant search service provider.

At operation 62, the query transform algorithm 54 and the results ordering algorithm 55 are decrypted and made ready for use by the MPC module 53 (as discussed above). In parallel with the operation 62, the user history and data (received from the local database 56) are decrypted and made ready for use by the MPC module.

At operation 64, the MPC module 53 uses the query transform algorithm 54 to generate a transformed query based on the raw search query, personal data of the user, and the search service provider's proprietary parameters relating to the query transform functionality.

At operation 65, the transformed query is sent to the remote indexed database 51 and search results are obtained. At this stage, the results are "raw" results (i.e. they are not ordered).

At operation 66, the search results are ordered using the result ordering algorithm 55. Then, at operation 67, the ordered results are sent to the user 52.

The algorithm 60 includes an optional payment process 68. As described in further detail below, a mechanism may be provided by which a user (such as the user 52) can pay for access to the search results. For example, the user may pay for search results to be ordered based on their (secret) personal data. The extent to which user information is shared with search provider may be dependent on the payment.

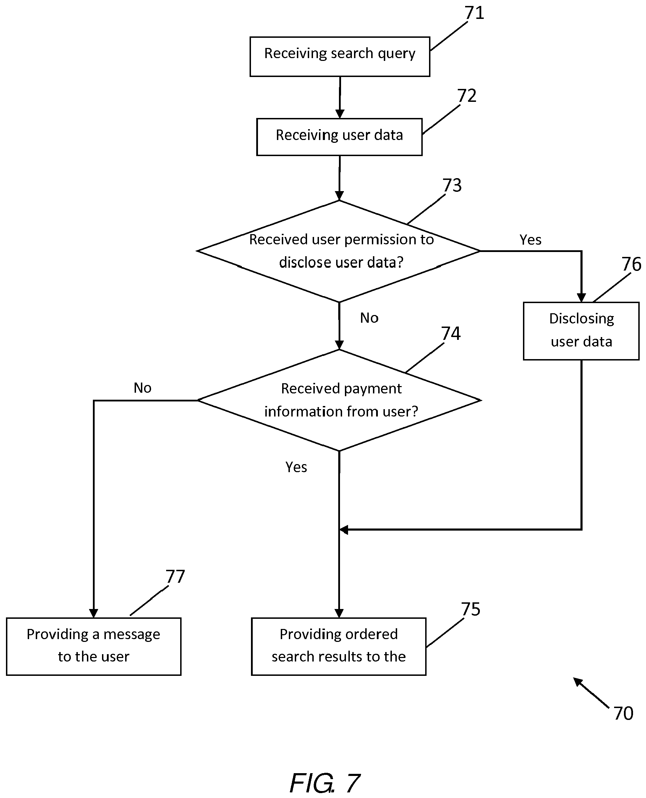

FIG. 7 is a flowchart showing an algorithm, indicated generally by the reference numeral 70, in accordance with an example embodiment. The algorithm 70 described an example mechanism to enable payments by a user. The algorithm 70 is provided by way of example only; the skilled person will be aware of many alternative arrangements that could be used.

A raw search query is received from the user at operation 71 of the algorithm 70 and user data is obtained from the user or from a database at operation 72 of the algorithm 70. Thus, the operations 71 and 72 are similar to the operations 41 and 42 of the algorithm 40 described above.

At operation 73, the user is prompted to select whether they prefer to disclose the user data to the search provider or whether they prefer to make a payment for receiving the search results. If the user selects to make a payment, the algorithm proceeds to operation 74. Alternatively, if the user selects to disclose user data, the algorithm proceeds to operation 76.

At operation 74, payment information is requested. At operation 74, if payment information is received from the user, second search results are provided to the user at operation 75. The search results may, for example, be generated as described above with reference to the algorithms 40 or 60. If neither a permission to disclose user data (operation 73), nor payment information (operation 74) is received from the user, a message is provided to the user at operation 77. The message may be an error message informing the user that the second search results may not be provided to the user. Alternatively, the message may include search results that are obtained using no personal data (i.e. not ordered, and that may be of less relevance to the user.

At operation 76, the relevant user data is provided to the search provider and suitable ordered search results are provided (without requiring payment) in the operation 75.

By way of example, the payment described above may be implemented by the user inputting a signed cryptocurrency transaction (for example together with the raw search query). Of course, alternative payment methodologies are possible (including more traditional credit card transactions). The use of financial payments and the disclosing of the user information represent two alternative incentives for the search engine provider to provide search services to the user concerned. For example, user information can be used to enable personalised advertisements to be provided to the user (thereby providing a potential revenue source to the search service provider). Clearly, alternative incentives are possible.

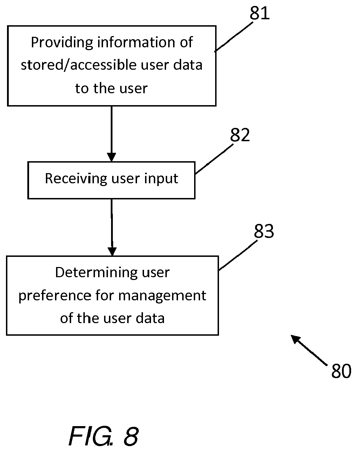

A user interface may be provided to enable a user to control disclosure of personal data. FIG. 8 is a flowchart showing an algorithm, indicated generally by the reference numeral 80, showing an example arrangement for setting preferences for such user data, in accordance with an example embodiment. The algorithm 80 is provided by way of example only; many alternative arrangements will be apparent to those skilled in the art.

At operation 81 of the algorithm 80, a user interface is used for displaying information regarding user data stored in a database or otherwise accessible (e.g. for the intermediary device 2 or the MPC 53 described above).

The user interface may be provided as part of an Internet browser (e.g. as part of privacy controls incorporated into such a browser). For example, privacy controls could be incorporated into browser settings. A user may, for example, be able to use the privacy controls to explicitly delete history (e.g. learned information regarding the user) that the user does not wish to be shared as part of a search query. Such settings can then be applied generally to all searches. Alternatively, or in addition, each search query could be customised using a feature, such as an "advanced search" feature that might be accessed through a browser. This feature may enable personal data to be edited or curated for the individual search. Alternative user interface arrangements will be apparent to those of ordinary skill in the art.

At operation 82, a user input is received. The user input may comprise user preferences for storing (in a database), disclosing (to a search provider), deleting and/or not disclosing one or more parts of the accessible user data. For example, a user may be willing to share their gender and date of birth with a search provider in order to obtain suitably ordered search results but may not be willing to share medical information (such as whether or not they are pregnant). When a user approves disclosing a part of the user data, that part of the user data may be disclosed to a search provider. Similarly, when a user does not approve disclosing a part of the user data, that part of the user data may not be disclosed to the search provider. The user input may, for example, be provided as a form, with some elements of the form selected (indicated that the relevant user data can be shared) and some elements of the form not selected (indicating that the relevant user data cannot be shared).

At operation 83, the intermediary device 2 determines the user preference for management of the user data, and uses the user data accordingly for processing search queries.

In practice, submitting the entire search history to an MPC can be wasteful and unnecessary. Thus, for example, a relevant user history may not comprise the complete search history, it might be formed from aggregate results or a combination of the two and represented, together with user data, as a vector of learned values that can be used in the search algorithm. Such a vector could be computed from raw data (e.g. entire search history data) locally at the user's end. One way in which this could be done is by distributing a secure hardware unit with trusted computing capabilities, such that it can contain the search engine's query transform and machine learning code for extracting the vector of parameters from user data continuously.

A by-product of the query transform stage might also be the update to and subsequent storage of the aggregated variables. A simple example of this would be an aggregate variable that indicates English-language preference. In this case, where all searches are performed in the English-language, then this value might be expected to be close to 100% (assuming the aggregate variable is a percentage). This might result in a more compact search structure and a simplification of MPC implementation.

For aggregate data updates, differential privacy techniques can be used.

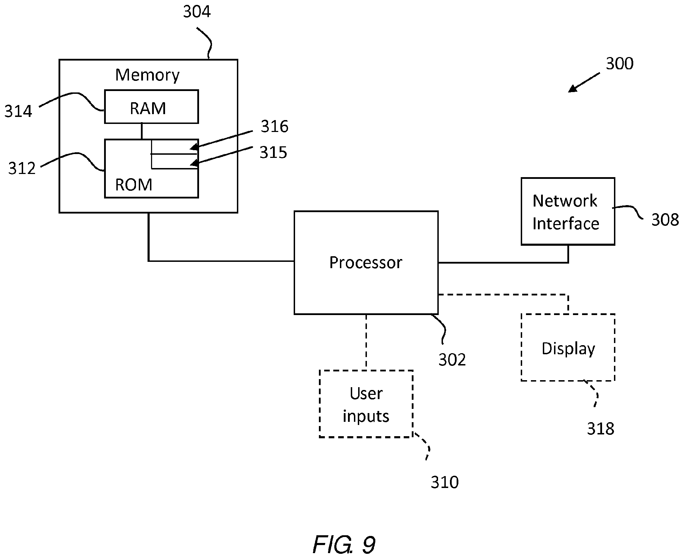

For completeness, FIG. 9 is a schematic diagram of components of one or more of the example embodiments described previously, which hereafter are referred to generically as processing systems 300. A processing system 300 may have a processor 302, a memory 304 closely coupled to the processor and comprised of a RAM 314 and ROM 312, and, optionally, user input 310 and a display 318. The processing system 300 may comprise one or more network/apparatus interfaces 308 for connection to a network/apparatus, e.g. a modem which may be wired or wireless. Interface 308 may also operate as a connection to other apparatus such as device/apparatus which is not network side apparatus. Thus direct connection between devices/apparatus without network participation is possible.

The processor 302 is connected to each of the other components in order to control operation thereof.

The memory 304 may comprise volatile memory, such as DRAM, and/or non-volatile memory, such as a hard disk drive (HDD) or a solid state drive (SSD). The ROM 312 of the memory 314 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 20, 40, 60, 70 and 80 described above. Note that in the case of small device/apparatus the memory can be most suitable for small size usage i.e. not always hard disk drive (HDD) or solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

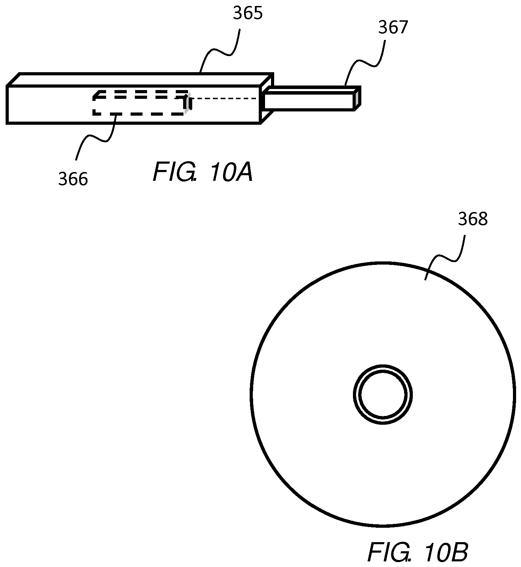

FIGs. 10A and 10B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 2, 4, 6, 7 and 8 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification. For example, although the embodiments above have generally been described with reference to multi-party computation (MPC) implementations, this is not essential to all embodiments. For example, the principles of homomorphic encryption or secure hardware may be used instead of MPC techniques.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for receiving a search query;
means for generating a transformed query based at least partially on the received search query, user data and one or more parameters relating to a search provider or search algorithm;
means for sending the transformed query to the search provider;
means for receiving first search results from the search provider in response to the transformed query;
means for generating second search results; and
means for providing second search results in response to said search query.

2. An apparatus as claimed in claim 1, wherein said search query is received from a user and/or said second search results are sent to said user.

3. An apparatus as claimed in claim 1 or claim 2, wherein said second search results are ordered search results, wherein said search results are ordered based at least partially on the user data.

4. An apparatus as claimed in any one of claims 1 to 3, wherein the means for generating the transformed query and/or the means for generating second search results comprises one or more multi party computation modules.

5. An apparatus as claimed in any one of the preceding claims, wherein some or all of the user data is obtained from a database.

6. An apparatus as claimed in any one of the preceding claims, wherein the one or more parameters relating to the search provider or search algorithm are received from the search provider.

7. An apparatus as claimed in any one of the preceding claims, further comprising means for determining a user history vector based on an aggregation or combination of user information and user search history, wherein said user data is based, at least in part, on said user history vector.

8. An apparatus as claimed in claim 7, wherein the user history vector is further based on aggregated user data of a plurality of users.

9. An apparatus as claimed in any one of the preceding claims, further comprising means for receiving a user input, wherein the user input comprises one or more user preferences for storing, disclosing, deleting and/or not disclosing one or more parts of the user data.

10. An apparatus as claimed in claim 9, wherein the means for generating the transformed query acts in accordance with the user preferences in the event that a payment is made.

11. An apparatus as claimed in any one of the preceding claims, further comprising means for enabling the user to provide a/the payment.

12. An apparatus as claimed in claim 10 or claim 11, wherein said payment is made using a signed cryptocurrency transaction from the user.

13. An apparatus as claimed in any one of the preceding claims, further comprising means for updating and storing aggregated variables.

14. An apparatus as claimed in any one of the preceding claims, wherein the means comprise:
at least one processor; and
at least one memory including computer program code, the at least one memory and the computer program code configured, with the at least one processor, to cause the performance of the apparatus.

15. A method comprising:
receiving a search query;
generating a transformed query based at least partially on the received search query, user data and one or more parameters relating to a search provider or search algorithm;
sending the transformed query to the search provider;
receiving first search results from the search provider in response to the transformed query;
generating second search results; and
providing second search results in response to said search query.

16. A computer program comprising instructions for causing an apparatus to perform at least the following:
receive a search query;
generate a transformed query based at least partially on the received search query, user data and one or more parameters relating to a search provider or search algorithm;
send the transformed query to the search provider;
receive first search results from the search provider in response to the transformed query;
generate second search results; and
provide second search results in response to said search query.
